# EUROPEAN PATENT APPLICATION

(11) **EP 3 961 014 A1**
(43) Date of publication of application: **02.03.2022**
(21) Application number: 20192933.8
(22) Date of filing: 26.08.2020
(51) Int. Cl.: F02C 7/143, F02C 3/30, F02C 6/18

(54) **POWER GENERATION PLANT WITH WATER SUPPLY**

(71) Applicant: Siemens Energy Global GmbH & Co. KG, 81739 München (DE)
(72) Inventor: Mannerfelt, Anton, 58731 Linköping (SE); Näs, Lennart, 60210 Norrköping (SE)

(57) **Abstract**

The invention is about a power generation plant with a gas turbine and a heat recovery boiler. To increase the power output of the gas turbine a wet compression and/or a water injection into the combustion chamber is used. To reduce the installation costs the water supply system of the heat recovery boiler is used to supply water to the gas turbine.

## Description

The invention is about a power generation plant with a gas turbine, where water is used for wet compression and/or combustion water injection.

Power generation plants with gas turbines are a common design. There the gas turbines comprise regular a compressor section, a combustion section and an expansion turbine section. In the compressor section the combustion air is conveyed and compressed. In the combustion section a fuel is burned with the combustion air. The flow of combustion air through the expansion turbine section generates the rotation of a turbine rotor.

To increase the power output of the gas turbine it is well known in the prior art to introduce water into the compressor section and/or into the combustion section.

The first option is known as "wet compression". Here, water is injected into the air stream at the inlet of the compressor section or at one of the first stages of the compressor section. The majority of the water evaporates relatively quickly in the first stages of the compressor. The useful output of the gas turbine increases on the one hand by increasing the mass flow and on the other hand by reducing the air temperature during compression.

The second option used the injection of water into the combustion section. This could be done by mixing water with the fuel or by injection of water directly into the combustion chamber. In both cases the combustion leads to an immediate evaporation of water and an increase of the flow through the expansion turbine. Further the injection of water leads to a reduction of the combustion temperature.

If a water injection of a wet compression should be used, in both cases a water supply is necessary. Further it is necessary, that a huge amount of water could be supplied after a very short reaction time.

This regularly leads to the need for further supply facilities in the power generation plant and therefore to higher installation costs. In many cases this prevents the use of the advantageous water injection or wet compression.

The task for the current invention is therefore to make the use of water injection of wet compression more cost-effective.

The task is solved by a power generation plant according the features of claim 1. Advantageous solutions are given in the dependent claims.

A generic power generation plant comprises first of all a gas turbine. As known from the state of the art the gas turbine has a compressor and a combustion section and an expansion turbine. Several different designs for a gas turbine are known, for which no further explanation is required in the view of the present invention.

Next, the power generation plant comprises a heat recovery boiler, which enables the recovery of heat from the flue gas produced by the gas turbine by a heat transfer to an evaporation fluid. In this respect it is irrelevant what the heated evaporation fluid is used for. For example, it could be used to drive a steam turbine or to heat buildings or to enable other industrial processes. To enable the heat transfer, the heat recovery boiler comprises several heat exchanges, whereby the flue gas passes along the heat exchangers through which the evaporation fluid flows.

A water supply system is necessary to supply water to at least one of the heat exchangers. Here, it is necessary, that the water supply system can provide water with an increased pressure. In this context increases pressure means a pressure above 10 bar as this is higher than regular used in common water supply, which has usually something about 8 bar.

To enable a wet compression and/or a water injection without higher installation costs, the inventive solution connects the water supply system with the compressor and/or with the combustion section. This leads to the possibility to feed water into the compressor and/or combustion section without the usual need for a separate water supply for the gas turbine.

To enable the injection of water for example direct into the combustion chamber, at a preferred solution the water supply system is enabled to supply water with a pressure of at least 80 bar. Here, it is particular advantageous to use a pressure of at least 100 bar.

To control the water flow into the compressor preferably a compressor water valve is arranged in-between the water supply system and the compressor.

Analogous, it is advantageous to arrange a combustion water valve in-between the water supply system and the combustion section.

Preferably the method of wet compression or water injection is not used as regular operation method, but to enhance the power output of the gas turbine for a certain period. In this respect it is often necessary to increase the power output in a short reaction time. Therefore, it is advantageous if the water supply system is enabled to increase the water flow from zero - to the gas turbine - to at least 80% of the nominal water flow within a time span of 5 sec. It is particular advantageous if the water flow could be increased within a time span of 2 sec from zero to 80% of the nominal water flow.

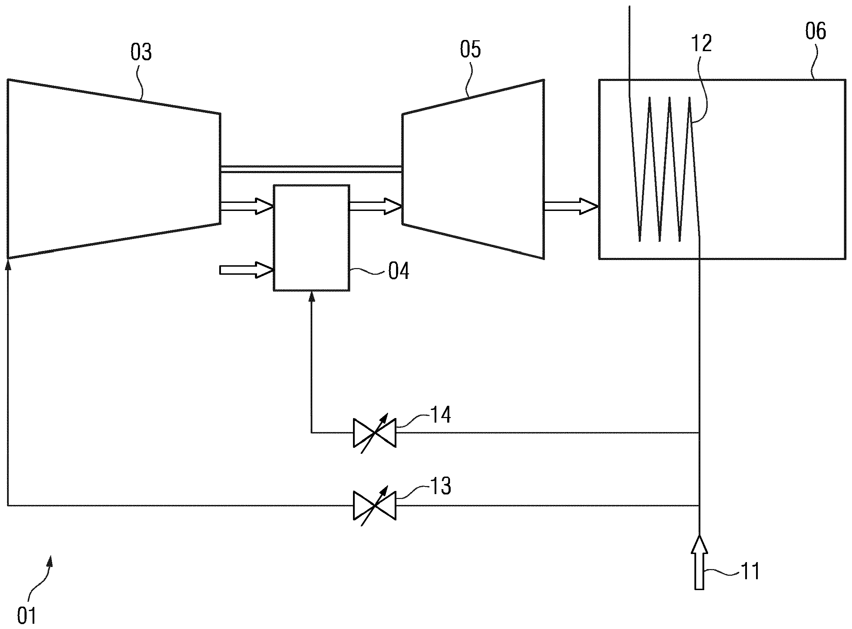

In the following figure 1 an example of an inventive power generation plant is sketched in respect to the invention.

In Fig. 1 a power generation plant 01 is sketched with a gas turbine and a waste heat boiler 06. The gas turbine comprises a compressor 03 and a combustion section 04 and an expansion turbine 05. The waste heat boiler 06 comprises several heat exchangers, wherein only one heat exchanger 12 is sketched here. The heat exchanger is connected to a water supply system 11.

The inventive solution comprises in this example further a connection from the water supply system 11 to the compressor 03 via a compressor water valve 13. Next a connection is enabled between the water supply system 11 and the combustion section 04 via a combustion water valve 14.

## Claims

1. Power generation plant (01) with a gas turbine and a heat recovery boiler (06) and a water supply system (11), wherein the gas turbine comprises a compressor (03) and a combustion section (04) and an expansion turbine (05), wherein the waste heat boiler (06) is connected to the outlet of the expansion turbine (05) and comprises several heat exchangers (12), by means of which waste heat from flue gas can be transferred to an evaporation medium, wherein the water supply system (11) is connected to at least one of the heat exchangers (12) and provides water with an increased pressure,
**characterized in that**
the water supply system (11) is connected to the compressor (03) and/or to the combustion section (04) and can feed water into the compressor (03) and/or combustion section (04).

2. Power generation plant according to claim 1,
wherein the water supply system (11) provides water with a pressure of at least 80 bar, preferably of at least 100 bar.

3. Power generation plant according to claim 1 or 2,
wherein the water supply system (11) is connected to the compressor (03) via a compressor water valve (13).

4. Power generation plant according to one of the claims 1 to 3,
wherein the water supply system (11) to the combustion section (04) via a combustion water valve (14).

5. Power generation plant according to one of the claims 1 to 4,
enabled to increase the water flow from zero to at least 80% of the nominal water flow within a time span of 5 sec, preferably within a time span of 2 sec.
